# EUROPEAN PATENT SPECIFICATION

(11) **EP 2 828 178 B1**
(45) Date of publication and mention of the grant of the patent: **18.05.2016**
(21) Application number: 13706208.9
(22) Date of filing: 15.02.2013
(51) Int. Cl.: B65D 30/08, B65D 30/22, B65D 81/34, B32B 15/08, B65D 75/58, B32B 15/20

(54) **PACKAGED SEASONING PRODUCT**
VERPACKTES WÜRZMITTEL
PRODUIT D'ASSAISONNEMENT EMBALLÉ

(30) Priority: 19.03.2012 EP 12160091
(43) Date of publication of application: 28.01.2015
(73) Proprietor: Unilever N.V., 3013 AL Rotterdam (NL); Unilever PLC, London, Greater London EC4Y 0DY (GB)
(72) Inventor: MUSSO, Laurent Bernard Georges, 74074 Heilbronn (DE); NATH, Prasanta Kumar, 74074 Heilbronn (DE)
(74) Representative: Tjon, Hon Kong Guno
(86) International application number: PCT/EP2013/053056
(87) International publication number: WO 2013/139539

(56) References cited:
- WO-A1-2007/017608
- FR-A1- 2 830 851
- US-A- 3 429 718
- US-A1- 2008 107 781

## Description

### TECHNICAL FIELD OF THE INVENTION

The invention relates to a packaged seasoning product, especially a packaged seasoning product that comprises a seasoning and a foldable bag that can be used to cook a seasoned food product in an oven.

The invention also provides a method of preparing a cooked foodstuff by introducing a seasoned food product in a foldable bag and keeping the foldable bag containing the seasoned food product in a preheated oven until the product is cooked.

### BACKGROUND OF THE INVENTION

Packaged seasoning products as described above are currently commercially available in several European countries, e.g. under the brand Knorr®. These commercial products typically comprise a pouch with two separate chambers, one chamber containing a dry seasoning mix and another chamber containing a folded oven bag made of a heat-resistant polymer and a clip or tie for closing the bag. Instructions provided on the pouch advise the consumer to prepare a ready-to-eat foodstuff by introducing a food product, such as meat, into the oven bag together with the seasoning, closing the bag with a clip or a tie and holding the filled bag in a preheated oven for a defined period of time.

US 2010/0272868 describes a container comprising a first and a second chamber separated by a peelable seal, wherein the second chamber contains a food component such as sauces, gravies, liquids, granules, powders or combinations thereof. The container can be used to prepare a foodstuff by opening the first chamber, placing a food base in the first chamber and closing the first chamber, opening the peelable seal so that the food component in the second chamber mixes with the food base in the first chamber. The US application mentions heating the container (e.g in a microwave or oven) to further prepare the food product. The multi-chambered containers can be made of flexible food grade polymeric materials, although the container could include non-polymeric materials such as metal foils.

"En Papillote" in French or "al cartoccio" in Italian, is a method of cooking in which food is put into a folded pouch or parcel and then baked. The parcel is typically made from folded parchment paper, but other material such as a paper bag or aluminum foil may be used. The parcel holds in moisture to steam the food. The moisture may be from the food itself or from an added moisture source like water, wine, or stock. En Papillote is often used to cook fish and also poultry. Choice of herbs, seasonings and spices depend on the particular recipe being prepared. The pouch should be sealed with careful folding.

FR 2 830 851 describes a package containing a food product as well as a bag containing a folded sheet of film material that is used to wrap the product for reheating and/or cooking. The film material is supple or semi-rigid but foldable, and is large enough to envelop the whole product. A film may be composed of thermoplastic material covered with a layer of aluminum. The film may have dimensions of, for instance, 70x70 mm, 70x100 mm or 50x100 mm. The film may be used to form a papillote and that ingredients, such as spices, may be introduced before cooking or heating.

WO 2007/017608 describes a sealed flexible packaging for food products which is intended to be heated for cooking purposes. The packaging comprises two heat-sealed laminate sheets. Each laminate sheet comprises at least one heat-sealable, high-temperature-resistant binding sheet between an aluminium sheet and a high-temperature-resistant, heat-sealable plastic sheet. The heat-sealable plastic sheet may be made of polypropylene or PET. US 2008/0107781 describes a food container including a frist compartment for retaining a food item and a second compartment for retaining an accessory for the food item.

### SUMMARY OF THE INVENTION

The present invention provides a packaged seasoning product according to claim 1. The packaged seasoning product comprises:
- a package;
- a seasoning that is contained within the package; and
- an empty foldable bag that is also contained within the package, said foldable bag being perfectly suited for "en papillote" type preparation of food products such a fish.

The foldable bag comprised in the present product has an internal volume of 0.5-8 liter, comprises an opening with a maximum diameter of 10-60 cm and is a flexible, foldable container or tube, formed of a thin laminate comprising an aluminum foil that forms the outer surface of the foldable bag and an inner layer of heat-resistant polymer. The foldable bag can conveniently be used to prepare a foodstuff in an oven. This may be done, for instance, by sprinkling the seasoning onto the food product that is to be prepared (e.g. a piece of salmon), closing the bag by folding it, and cooking the contents of the bag by introducing it into a hot oven.

As compared to oven bags made from heat-resistent polymer (e.g. PET), the foldable bag of the present invention offers the advantage that a better quality cooked product is obtained and that the bag can suitably be closed without a clip or a tie. In comparison to ordinary aluminum foil the present foldable bag offers the advantage that less scorch spots are formed on the interior surface of the bag during cooking and that the bag is less prone to tearing or puncturing than aluminum foil.

The present invention also provides a method of preparing a food product according to claim 14, said method comprising:
- introducing a food product together with a seasoning in a foldable bag as described herein;
- closing the bag by folding it;
- introducing the closed bag containing the food product and seasoning in a preheated oven; and
- removing the bag from the oven once the product is cooked.

### BRIEF DESCRIPTION OF THE DRAWINGS

Fig. 1 depicts a perspective view of the packaged seasoning product of the present invention
Fig. 2 depicts a sectional view taken on line 1-1 of Fig. 1
Fig. 4 depicts an unfolded, opened foldable bag into which a seasoned food product has been introduced
Fig. 5 depicts a foldable bag containing a seasoned food product that has been closed by folding

### DETAILED DESCRIPTION OF THE INVENTION

Accordingly, the present invention relates to a packaged seasoning product comprising:
- a package;
- 15-100 g of a seasoning that is contained within the package; and
- an empty foldable bag that is also contained within the package, said foldable bag having an internal volume of 0.5-8 liter and comprising an opening with a maximum diameter of 10-60 cm,
   wherein the foldable bag is a foldable container or tube, formed of a laminate having a thickness of 6-30 µm, said laminate comprising an aluminum foil that forms the outer surface of the foldable bag and an inner layer of heast-resistant polymer, said aluminum foil having a thickness of 2-15 µm and said layer of heat-resistant polymer having a thickness of 1-15 µm.

The term "seasoning" as used herein refers to a composition that can be added to foods to impart taste and/or smell thereto. Seasonings typically include at least one of herbs, spices and salt. Examples of seasonings include:
- Saline seasonings, e.g. salt and spiced salt
- Acid seasonings, e.g. vinegar, vinegar aromatized with herbs, lemon juice
- Hot seasonings, e.g. peppercorns, ground or coarsely chopped pepper, or mignonette pepper; paprika, curry, cayenne, and mixed pepper spices
- Saccharine seasonings, e.g. sugar or honey
- Condiments, e.g. onions, shallots, garlic, chives, and horseradish.
- Hot condiments, e.g. mustard, capers, Worcestershire, chili, Tabasco
- Fatty substances, e.g. butter, olive oil, infused oils

The term "bag" as used herein refers to a non-rigid container or tube that is made of a flexible, foldable material. The bag may suitably be closed by folding the flexible, foldable material at the open end(s) so as to seal these openings. Preferably, the foldable bag employed in accordance with the present invention has only one opening.

The inner layer of heat-resistant polymer is heat-resistant, i.e. it does not degrade at oven temperatures and it does not interact with the food components contained therein. Preferably, the layer of heat-resistant polymer has non-stick properties as this facilitates removal of the cooked product and minimizes formation of scorch spots (small amounts of carbonized material sticking to the inside of the foldable bag).

The thermo-resistant polymer is suitably selected from the group consisting of polyesters, polyamides, cellophane, cellulose triacetate, ethylene chlorotrifluoroethylene copolymers, fluorinated polyethylene, polyimides, polysulfones, polyvinyl alcohol polymers, polyetheretherketones, and polytetrafluoroethylene and combinations thereof. More preferably, the thermoresistant polymer comprises at least 60 wt.%, even more preferably at least 80 wt.% of one or more polyesters. Most preferably, the polyester is polyethylene terephthalate (PET).

The foldable bag employed in accordance with the present invention preferably can withstand a temperature of 200°C, more preferably of 220°C for at least 15 minutes without melting or degrading.

The laminate from which the foldable bag is formed may contain further layers of material besides the aluminum foil and the layer of heat-resistant polymer. For instance, the laminate may suitably contain an adhesion layer that fixates the layer of heat-resistant polymer to the aluminum foil. The layer of heat-resistant polymer may also be covered with a layer of material that impart anti-stick properties thereto. Typically, the aluminum foil and the layer of heat-resistant polymer together represent at least 80wt.%, more preferably at least 85 wt.% and most preferably at least 90 wt.% of the laminate.

The laminate from which the foldable bag is formed preferably has a thicknes of 7-25 µm, most preferably of 7.5-20 µm. The aluminum foil employed in the laminate preferably has a thickness of 3-12 µm, most preferably of 4-10 µm. The layer of heat-resistant polymer that is contained in the laminate preferably has a thickness of 2-12 µm, most preferably of 2.5-10 µm.

The amount of seasoning contained in the present package preferably lies within the range of 18-80 g, most preferably of 20-60 g.

As explained herein before, the seasoning may comprise a variety of edible, flavour imparting ingredients. Preferably, the seasoning comprises at least one of spices, herbs and salt. Even more preferably, the seasoning comprises at least 20 wt.%, more preferably at least 50 wt.% and most preferably at least 80 wt.% of taste imparting components selected from spices, herbs, salt and combinations thereof.

The seasoning of the present invention may be a powder, a paste or a liquid. Preferably, the seasoning is a powder. Even more preferably, the seasoning is a dry blend comprising 30-100 wt.%, more preferably 60-100 wt.% seasoning ingredients selected from spices, herbs, salt, vegetables, fruit, fat, flour, starch, maltodextrin and combinations thereof.

According to particular preferred embodiment of the packaged seasoning product, the package comprises at least two chambers, wherein one chamber contains the seasoning and the other chamber contains the foldable bag.

Examples of packages that can be employed in the present product include pouches, containers, cans, tubs, cartons. According to a particularly preferred embodiment, the package is a pouch, preferably a pouch comprising a layer of food grade polymeric material and a layer of non-polymeric material (e.g. aluminum or a metallised layer).

Unlike the foldable bag, the package of the present product typically is not heat-resistant. The package typically has an internal volume of 40-500 ml, more preferably of 50-200 ml and most preferably of 60-100 ml.

The package of the present product preferably comprises instructions for preparing a ready-to-eat cooked food product, notably instructions advising a consumer to do so by introducing a food product together with the seasoning in the foldable bag and heating the so enclosed food product in an oven. These instruction may indicate that the seasoning is to be applied onto the food product as such or, alternatively, they may indicate that the seasoning is to be mixed with other ingredients (e.g. cream, water, fresh herbs etc.) before being applied. Preferably, the package comprises instructions to prepare the food product by heating it in an oven that has been preheated to a temperature in excess of 150°C, more preferably in excess of 180°C.

The foldable bag that is contained in the present product is preferably made from a folded sheet of laminate or from two sheets of laminate. The folded sheet or the two sheets are suitably sealed together at the edges to form the present foldable bag.

The foldable bag should be sufficiently large to allow to be closed by folding. Preferably, the foldable bage has an internal volume of 1-5 liter, most preferably of 2-4 liter.

The foldable bag preferably comprises an opening having a minimum diameter of 5-50 cm, more preferably of 10-40 cm. The maximum diameter of said opening preferably lies in the range of 15-55 cm, most preferably of 20-50 cm.

The foldable bag preferably is rectangular in shape. Even more preferably, the length of the foldable bag is 25-60 cm and the width of the foldable bag is 20-50 cm.

The foldable bag is preferably contained in the packages as a folded item. Even more preferably, the folded foldable bag has a length of 3-12 cm and a width of 2.5-6 cm. Typically, the folded foldable bag comprises at least 4 folds (i.e. at least 16 layers).

Furthermore, the invention relates to a method of preparing a food product, said method comprising:
- providing a packaged seasoning product as defined herein before;
- opening the package ;
- removing the foldable bag from the package and opening the foldable bag;
- introducing a food product together with the seasoning in the opened foldable bag;
- closing the bag by folding it;
- introducing the closed bag containing the food product and seasoning in an oven that has been preheated to a temperature of at least 150°C, more preferably of at least 180°C; and
- removing the bag from the oven after at least 5 minutes, more preferably at least 10 minutes.

Examples of food products that may suitably be prepared by this method include fish, poultry, other types of meat, vegetables cut in pieces and combinations thereof. According to a particularly preferred embodiment, the aforementioned method is used to prepare fish or poultry.

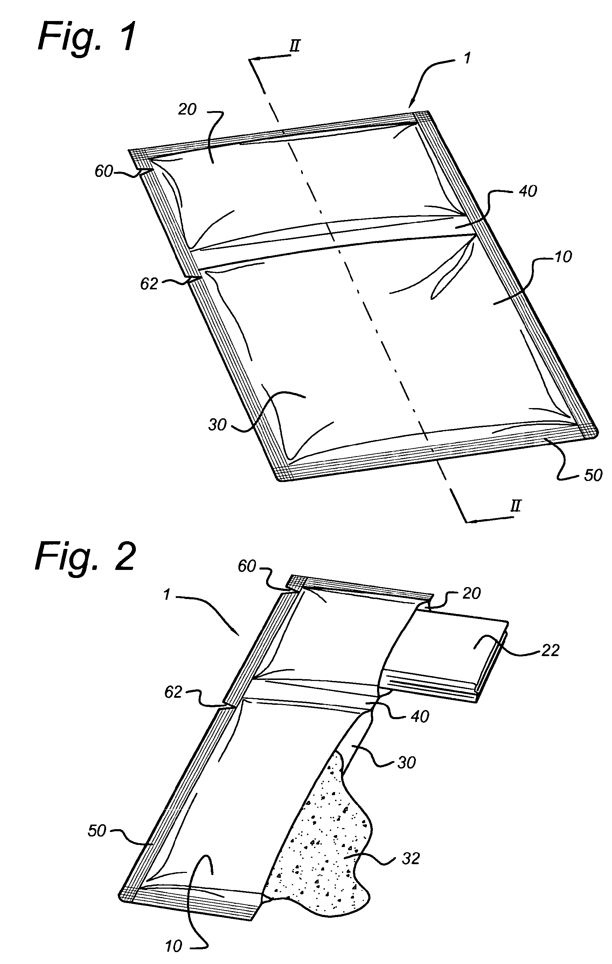

In a general embodiment shown in Fig. 1 the present invention provides a packaged seasoning product **1.** Pouch **10** comprises a first chamber **20** and a second chamber **30.** A seal **40** separates the first chamber **20** and the second chamber **30.** The pouch **10** can be made, for example, from two plies of laminate that are sealed about the periphery of the pouch **10** at the edges to form an outer seal **50.** A portion of the outer seal **50** can define notches **60** and **62.** The notches **60** and **62** allow a consumer to more easily tear open the pouch **10** and thus gain access to the first chamber **20** and the second chamber **30.**

The cross sectional view of the packaged seasoning product **1** shown in Fig. 2 depicts pouch **10.** The pouch **10** comprises the first chamber **20** holding a folded foldable bag **22** and the second chamber **30** having a seasoning mix **32** stored therein.

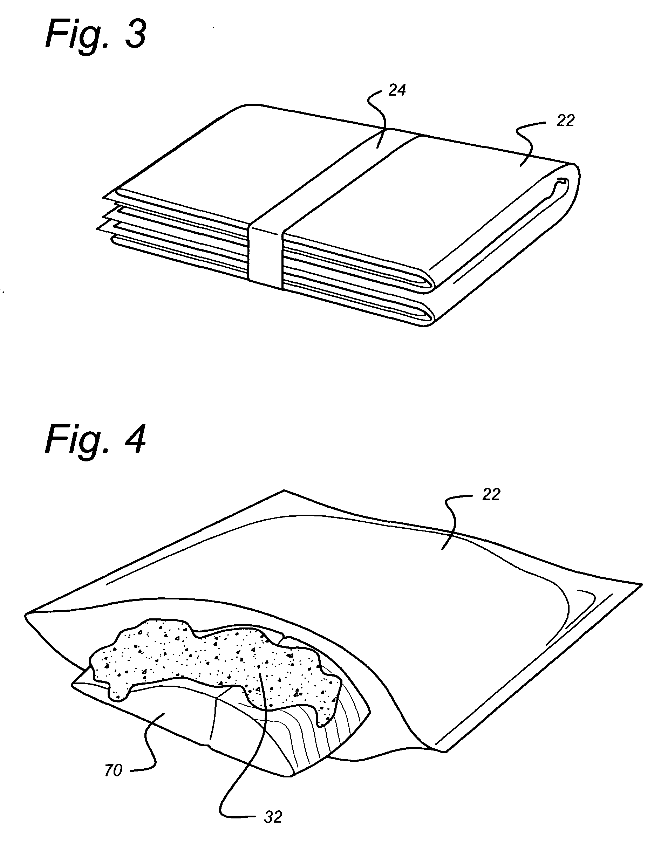

Fig. 3 depicts a close-up of the folded foldable bag **22.** The foldable bag **22** has been folded 6 times is held together by tape **24.**

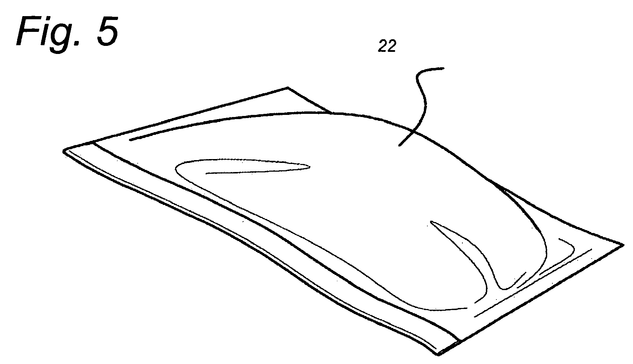

To use the packaged seasoning product 1 in the preparation of a cooked foodstuff by a consumer may, for instance, proceed as follows (see Fig. 4 and 5):
- Tear pouch **10** at notch **60** to access the first chamber **20.** Remove the folded foldable bag **22** from the first chamber **20** and peel off the tape **24.** Completely unfold the foldable bag **22** so it is ready for use.
- Tear pouch **10** at notch **62** to create an opening in the second chamber **30.** Sprinkle the seasoning mix **32** over food product **70,** e.g. a piece of salmon, through the opening in the second chamber **30.**
- Introduce the seasoned food product **70** into the opened foldable bag **22** (see Fig. 4).
- Close the foldable bag **22** by folding it (see Fig. 5).
- Introduce the closed foldable bag **22** into a preheated oven, e.g. an oven that has been preheated to 220°C.
- Remove the foldable bag **22** from the oven after 20 minutes.
- Keep the foldable bag **22** at ambient temperature for 1-2 minutes and open the bag **22,** e.g. by cutting it with a knife or scissors. Remove the cooked seasoned food product **70** from the opened bag **22.**

The cooked foodstuff so obtained is ready to serve and may be combined with other food components, e.g. pasta, rice, vegetables, potatoes, French fries, sauce, etc.

The invention is further illustrated by the following non-limiting examples.

### EXAMPLES

### Example 1

Baked salmon fillet was prepared in an oven using the three different envelopes described in Table 1:

**Table 1**

| | Size | Thickness | Internal volume |
|---|---|---|---|
| A - aluminum foil | 40 x 30 cm | 17 µm | 4 l |
| B - PET bag | 38 x 30 cm | 12 µm | 5 l |
| C - Alu/PET bag | 40 x 30 cm | 14 µm | 4 l |

The Alu/Pet bag C was made from a laminate consisting of aluminum (8 µm) and PET (5.5 µm), the PET layer forming the inside of the bag.

Three portions of frozen salmon were each combined with a top layer consisting of a mixture of vegetables and seasoning using the quantities indicated in Table 2.

**Table 2**

| | Grams |
|---|---|
| Frozen salmon (3 pieces) | 500 |
| Paprika | 200 |
| Onion | 100 |
| Mushroom | 200 |
| Seasoning | 40 |

The seasoning employed was a powder mix containing herb, spices, sugar & salt.
The combination of salmon, vegetables and seasoning was introduced in each of the envelopes A, B and C described herein before. Envelops A and C were closed by folding. Envelop B was closed with a clip.

The closed envelops containing the frozen salmon, vegetables and seasoning were introduced in an oven that had been preheated to 220°C. The envelops were removed after 25 minutes. The envelopes were opened 2 minutes after they had been removed from the oven and the cooked contents were evaluated by an expert panel consisting of 4 panellists. The results of the evaluation are summarised in Table 3.

**Table 3**

| A | B | C |
|---|---|---|
| • Salmon and vegetables properly cooked. | • Salmon and vegetables properly cooked | • Salmon and vegetables properly cooked |
| • Nice appearance | • Food looks steamy | • Nice appearance |
| • Bit dry | • A lot of juice | • A lot of juice |
| • Black burned spots on the aluminum foil | • Small black spots on the inside of the bag | • No burned spots on bag interior |

The expert panel unanimously preferred the cooked salmon that had been prepared with the Alu/PET bag C.

### Example 2

Example 1 was repeated, except that this time the oven time was reduced from 25 to 20 minutes. The results of the evaluation by the expert panel are summarized in Table 4.

**Table 4**

| A | B | C |
|---|---|---|
| • Salmon and vegetables properly cooked | • Salmon and vegetables not properly cooked | • Salmon and vegetables properly cooked |
| • Nice appeance | • Food looks steamy | • Nice appearance |
| • Juicy | • Some juice | • A lot of juice |
| • Black burned spots on the aluminum foil | • Dry on top | • No burned spots on bag interior |
| | • Small black spots on the inside of the bag | |

The expert panel again unanimously preferred the cooked salmon that had been prepared with the Alu/PET bag C.

### Example 3

Example 1 was repeated, except that this time the oven time was reduced from 25 to 15 minutes and that only envelops B and C were tested. The results of the evaluation by the expert panel are summarized in Table 5.

**Table 5**

| B | C |
|---|---|
| • Salmon and vegetables still largely uncooked | • Salmon and vegetables properly cooked |
| | • Nice appearance |
| | • A lot of juice |
| | • No burned spots on bag interior |

### Example 4

Baked salmon fillet was prepared using the recipe and oven conditions described in Example 1. The salmon portions carrying a mixture of vegetables and seasoning were either wrapped in a sheet of Alu/PET foil (80x300 cm) or introduced in a bag made of the same Alu/PET foil (40x30 cm). The bag was closed by folding.

The Alu-PET foil used consisted of a layer of aluminum (8 µm) and a layer of PET (5.5 µm), bound together by an adhesive layer (1.5 µm). The PET layer formed the inside of the bag and the sheet of foil was wrapped around the salmon portion with the PET layer on the inside.

Baked salmon fillets of excellent quality were obtained with the foil sheet as well as the bag.

As compared to the foil sheet, the bag offered much more convenience in that it was much easier to close the bag and to thereby prevent leakage during cooking. Furthermore, with the bag there was no risk of enveloping the product with the PET-layer on the outside. Finally, the bag was more econimical than the foil sheet as less foil material was needed.

### Example 5

Baked salmon fillet was prepared in an oven using the Alu/PET bag described in Example 1 or using a casserole (240X190X75 mm).

Two portions of frozen salmon were each combined with a top layer consisting of a mixture of vegetables and seasoning using the quantities indicated in Table 6.

**Table 6**

| | Grams |
|---|---|
| Frozen salmon | 500 |
| Cherry tomato | 200 |
| Bay leaf | 100 |
| Cream | 150 |
| Seasoning | 40 |

The seasoning employed was a powder mix containing herb, spices, sugar & salt.
The combination of salmon, vegetables and seasoning was introduced in the Alu/PET bag which was closed by folding. The combination of salmon, vegetables and seasoning was also introduced in the casserole.

The closed bag and the casserole containing the frozen salmon, vegetables and seasoning were introduced in an oven that had been preheated to 220°C. The cooking results were evaluated after 15, 20 and 25 minutes oven time by an expert panel. The results of the evaluation are summarised in Table 7.

**Table 7**

| Oven time | Alu/PET bag | Casserole |
|---|---|---|
| 15 min. | • Salmon and vegetables properly cooked | • Salmon and vegetables not properly cooked |
| | • Nice appearance | |
| | • A lot of juice | |
| 20 min. | • Salmon and vegetables properly cooked | • Salmon and vegetable not properly cooked |
| | • Nice appearance | • Dry surface |
| | • A lot of juice | • Some juice at the bottom |
| 25 min. | • Salmon and vegetables properly cooked | • Salmon and vegetables properly cooked |
| | • Nice appearance | • Food looks dry |
| | • A lot of juice | • Small amount of juice at the bottom |

The expert panel unanimously preferred the cooked salmon that had been prepared with the Alu/PET bag after 15, 20 and 25 minutes cooking time.

## Claims

1. A packaged seasoning product (1) comprising:
• a package (10);
• 15-100 g of a seasoning (32) that is contained within the package(10); and
• an empty foldable bag (22) that is also contained within the package, said foldable bag (22) having an internal volume of 0.5-8 liter and comprising an opening with a maximum diameter of 10-60 cm,
wherein the foldable bag (22) is a flexible container or tube, formed of a laminate having a thickness of 6-30 µm, said laminate comprising an aluminum foil that forms the outer surface of the foldable bag (22) and an inner layer of heat-resistant polymer, said aluminum foil having a thickness of 2-15 µm and said layer of heat-resistant polymer having a thickness of 1-15 µm.

2. Packaged seasoning product according to claim 1, wherein the layer of heat-resistant polymer comprises a polymer selected from polyesters, polyamldes, cellophane, cellulose triacetate, ethylene chlorotrifluoroethylene copolymers, fluorinated polyethylene, polyimides, polysulfones, polyvinyl alcohol polymers, polyetheretherketones, and polytetrafluoroethylene and combinations thereof.

3. Packaged seasoning product according to claim 2, wherein the heat-resistant polymer comprises polyethylene terephthalate.

4. Packaged seasoning product according to any one of the preceding claims, wherein the aluminum foil and the layer of heat-resistant polymer together represent at least 80 wt.% of the laminate.

5. Packaged seasoning product according to claim 1, wherein the seasoning (32) is a dry blend comprising 30-10D wt.% seasoning ingredients selected from spices, herbs, salt, vegetables, fruit, fat, flour, starch, maltodextrin and combinations thereof.

6. Packaged seasoning product according to any one of the preceding claims, wherein the package (10) comprises at least two chambers (20,30), wherein one chamber (30) contains the seasoning (32) and the other chamber (20) contains the foldable bag (22).

7. Packaged seasoning product according to any one of the preceding claims, wherein the foldable bag (22) is made from a folded sheet of laminate or from two sheets of laminate.

8. Packaged seasoning product according to any one of the preceding claims, wherein the opening of the foldable bag (22) has a minimum diameter of 10-40 cm.

9. Packaged seasoning product according to any one of the preceding claims, wherein the foldable bag (22) is rectangular.

10. Packaged seasoning product according to claim 9, wherein the length of the foldable bag (22) is 25-60 cm and the width of the foldable bag is 20-50 cm.

11. Packaged seasoning product according to any one of the preceding claims, wherein the foldable bag (22) is folded and the folded foldable bag has a length of 3-12 cm and a width of 2.5-6 cm.

12. Packaged seasoning product according to claim 11, wherein the folded foldable bag (22) comprises at least 4 folds.

13. Packaged seasoning product according to any one of the preceding claims, wherein the package (10) comprises instructions to prepare a ready-to-eat cooked food product by introducing a food product together with the seasoning (32) in the foldable bag (22) and heating the so enclosed food product in an oven.

14. A method of preparing a food product, said method comprising:
• providing the packaged seasoning product (1) according to any one of the preceding claims;
• opening the package (10);
• removing the foldable bag (22) from the package (10) and opening the foldable bag (22);
• introducing a food product (70) together with the seasoning (32) in the opened foldable bag (22);
• closing the bag (22) by folding it;
• introducing the closed bag containing the food product and seasoning in an oven that has been preheated to a temperature of at least 150°C; and
• removing the bag from the oven after at least 5 minutes.

15. Method according to claim 14, wherein the food product (70) is fish or poultry.

## Patentansprüche

1. Verpacktes Würzprodukt (1), das umfasst:
- eine Verpackung (10);
- 15-100 g eines Würzmittels (32), das in der Verpackung (10) enthalten ist; und
- einen leeren faltbaren Beutel (22), der ebenfalls in der Verpackung enthalten ist, wobei der faltbare Beutel (22) ein Innenvolumen von 0,5-8 Litern aufweist und eine Öffnung mit einem maximalen Durchmesser von 10-60 cm umfasst,
wobei der faltbare Beutel (22) ein biegsamer Behälter oder Schlauch ist, der aus einem Laminat gebildet ist, das eine Dicke von 6-30 µm hat, wobei das Laminat eine Aluminiumfolie, die die äußere Oberfläche des faltbaren Beutels (22) bildet, und eine innere Schicht aus hitzebeständigem Polymer umfasst, wobei die Aluminiumfolie eine Dicke von 2-15 µm hat und die Schicht aus hitzebeständigem Polymer eine Dicke von 1-15 µm hat.

2. Verpacktes Würzprodukt nach Anspruch 1, wobei die Schicht aus hitzebeständigem Polymer ein Polymer umfasst, das aus Polyestern, Polyamiden, Zellophan, Zellulose-Triacetat, Ethylen-Chlortrifluorethylen-Copolymeren, fluoriertem Polyethylen, Polyimiden, Polysulfonen, Polyvinylalkoholpolymeren, Polyetheretherketonen und Polytetrafluorethylen und Kombinationen daraus gewählt ist.

3. Verpacktes Würzprodukt nach Anspruch 2, wobei das hitzebeständige Polymer Polyethylenterephthalat umfasst.

4. Verpacktes Würzprodukt nach einem der vorhergehenden Ansprüche, wobei die Aluminiumfolie und die Schicht aus hitzebeständigem Polymer zusammen wenigstens 80 Gew.-% des Laminats darstellen.

5. Verpacktes Würzprodukt nach Anspruch 1, wobei das Würzmittel (32) eine Trockenmischung ist, die 30-100 Gew.-% Würzingredienzien umfasst, die aus Gewürzen, Kräutern, Salz, Gemüse, Früchten, Fett, Mehl, Stärke, Maltodextrin und Kombinationen davon ausgewählt werden.

6. Verpacktes Würzprodukt nach einem der vorhergehenden Ansprüche, wobei die Verpackung (10) wenigstens zwei Kammern (20, 30) umfasst, wobei eine Kammer (30) das Würzmittel (32) enthält und wobei die andere Kammer (20) den faltbaren Beutel (22) enthält.

7. Verpacktes Würzprodukt nach einem der vorhergehenden Ansprüche, wobei der faltbare Beutel (22) aus einer gefalteten Lage eines Laminats oder aus zwei Lagen eines Laminats hergestellt ist.

8. Verpacktes Würzprodukt nach einem der vorhergehenden Ansprüche, wobei die Öffnung des faltbaren Beutels (22) einen minimalen Durchmesser von 10-40 cm hat.

9. Verpacktes Würzprodukt nach einem der vorhergehenden Ansprüche, wobei der faltbare Beutel (22) rechteckig ist.

10. Verpacktes Würzprodukt nach Anspruch 9, wobei die Länge des faltbaren Beutels (22) 25-60 cm beträgt und die Breite des faltbaren Beutels 20-50 cm beträgt.

11. Verpacktes Würzprodukt nach einem der vorhergehenden Ansprüche, wobei der faltbare Beutel (22) gefaltet ist und der gefaltete faltbare Beutel eine Länge von 3-12 cm und eine Breite von 2,5-6 cm hat.

12. Verpacktes Würzprodukt nach Anspruch 11, wobei der gefaltete faltbare Beutel (22) wenigstens 4 Faltungen umfasst.

13. Verpacktes Würzprodukt nach einem der vorhergehenden Ansprüche, wobei die Verpackung (10) Anweisungen zum Zubereiten eines gekochten Lebensmittel-Fertigprodukts durch Einführen eines Lebensmittelprodukts zusammen mit dem Würzmittel (32) in den faltbaren Beutel (22) und durch Erhitzen des so umschlossenen Lebensmittelprodukts in einem Ofen umfasst.

14. Verfahren zum Zubereiten eines Lebensmittelprodukts, wobei das Verfahren die Schritte umfasst:
• Bereitstellen des verpackten Würzprodukts (1) nach einem der vorhergehenden Ansprüche;
• Öffnen der Verpackung (10);
• Entfernen des faltbaren Beutels (22) aus der Verpackung (10) und Öffnen des faltbaren Beutels (22);
• Einführen eines Lebensmittelprodukts (70) zusammen mit dem Würzmittel (32) in den geöffneten faltbaren Beutel (22);
• Schließen des Beutels (22) durch Falten;
• Einbringen des geschlossenen Beutels, der das Lebensmittelprodukt und das Würzmittel enthält, in einen Ofen, der auf eine Temperatur von wenigstens 150 °C vorgeheizt wurde; und
• Entfernen des Beutels aus dem Ofen nach wenigstens 5 Minuten.

15. Verfahren nach Anspruch 14, wobei das Lebensmittelprodukt (70) Fisch oder Geflügel ist.

## Revendications

1. Produit d'assaisonnement emballé (1) comprenant :
• un emballage (10) ;
• 15-100 g d'un assaisonnement (32) qui est contenu dans l'emballage (10) ; et
• un sac pliable vide (22) qui est également contenu dans l'emballage, ledit sac pliable (22) présentant un volume interne de 0,5-8 litres et comprenant une ouverture avec un diamètre maximal de 10-60 cm,
dans lequel le sac pliable (22) est un récipient ou tube flexible, formé d'un stratifié présentant une épaisseur de 6-30 µm, ledit stratifié comprenant une feuille d'aluminium qui forme la surface externe du sac pliable (22) et une couche interne de polymère résistant à la chaleur, ladite feuille d'aluminium présentant une épaisseur de 2-15 µm et ladite couche de polymère résistant à la chaleur présentant une épaisseur de 1-15 µm.

2. Produit d'assaisonnement emballé selon la revendication 1, dans lequel la couche de polymère résistant à la chaleur comprend un polymère choisi parmi des polyesters, des polyamides, du cellophane, du triacétate de cellulose, des copolymères d'éthylène et de chlorotrifluoroéthylène, du polyéthylène fluoré, des polyimides, des polysulfones, des polymères de poly(alcool vinylique), des polyétheréthercétones, et du polytétrafluoroéthylène et des combinaisons de ceux-ci.

3. Produit d'assaisonnement emballé selon la revendication 2, dans lequel le polymère résistant à la chaleur comprend du polyéthylène téréphtalate.

4. Produit d'assaisonnement emballé selon l'une quelconque des revendications précédentes, dans lequel la feuille d'aluminium et la couche de polymère résistant à la chaleur représentent ensemble au moins 80 % en masse du stratifié.

5. Produit d'assaisonnement emballé selon la revendication 1, dans lequel l'assaisonnement (32) est une combinaison sèche comprenant 30-100 % en masse d'ingrédients d'assaisonnement choisi parmi des épices, des herbes, du sel, des légumes, des fruits, de la graisse, de la farine, de l'amidon, de la maltodextrine et des combinaisons de ceux-ci.

6. Produit d'assaisonnement emballé selon l'une quelconque des revendications précédentes, dans lequel l'emballage (10) comprend au moins deux chambres (20, 30), dans lequel une chambre (30) contient l'assaisonnement (32) et l'autre chambre (20) contient le sac pliable (22).

7. Produit d'assaisonnement emballé selon l'une quelconque des revendications précédentes, dans lequel le sac pliable (22) est constitué d'une feuille pliée de stratifié ou de deux feuilles de stratifié.

8. Produit d'assaisonnement emballé selon l'une quelconque des revendications précédentes, dans lequel l'ouverture du sac pliable (22) présente un diamètre minimal de 10-40 cm.

9. Produit d'assaisonnement emballé selon l'une quelconque des revendications précédentes, dans lequel le sac pliable (22) est rectangulaire.

10. Produit d'assaisonnement emballé selon la revendication 9, dans lequel la longueur du sac pliable (22) est de 25-60 cm et la largeur du sac pliable est de 20-50 cm.

11. Produit d'assaisonnement emballé selon l'une quelconque des revendications précédentes, dans lequel le sac pliable (22) est plié et le sac pliable plié présente une longueur de 3-12 cm et une largeur de 2,5-6 cm.

12. Produit d'assaisonnement emballé selon la revendication 11, dans lequel le sac pliable plié (22) comprend au moins quatre plis.

13. Produit d'assaisonnement emballé selon l'une quelconque des revendications précédentes, dans lequel l'emballage (10) comprend des instructions pour préparer un produit alimentaire cuit prêt à être consommé par introduction d'un produit alimentaire avec l'assaisonnement (32) dans le sac pliable (22) et par chauffage du produit alimentaire ainsi enfermé dans un four.

14. Procédé de préparation d'un produit alimentaire, ledit procédé comprenant :
• la fourniture du produit d'assaisonnement emballé (1) selon l'une quelconque des revendications précédentes ;
• l'ouverture de l'emballage (10) ;
• le prélèvement du sac pliable (22) de l'emballage (10) et l'ouverture du sac pliable (22) ;
• l'introduction d'un produit alimentaire (70) avec l'assaisonnement (32) dans le sac pliable ouvert (22) ;
• la fermeture du sac (22) par pliage de celui-ci ;
• l'introduction du sac fermé contenant le produit alimentaire et l'assaisonnement dans un four qui a été préchauffé à une température d'au moins 150 °C ; et
• le prélèvement du sac du four après au moins 5 minutes.

15. Procédé selon la revendication 14, dans lequel le produit alimentaire (70) est du poisson ou de la volaille.
